# EUROPÄISCHE PATENTSCHRIFT

(11) **EP 2 303 649 B1**
(45) Veröffentlichungstag und Bekanntmachung des Hinweises auf die Patenterteilung: **24.10.2012**
(21) Anmeldenummer: 09769085.3
(22) Anmeldetag: 22.05.2009
(51) Int. Cl.: B60S 1/08, H02K 7/116

(54) **VERFAHREN ZUR ERKENNUNG DES DREHWINKELS UND EINER REVERSIERPOSITION EINER GETRIEBE-ANTRIEBSEINHEIT**
METHOD FOR RECOGNIZING THE ROTATIONAL ANGLE AND A REVERSE POSITION OF A TRANSMISSION DRIVE UNIT
PROCÉDÉ DE DÉTECTION DE L'ANGLE DE ROTATION ET D'UNE POSITION DE MARCHE ARRIÈRE D'UNE UNITÉ D'ENTRAÎNEMENT - TRANSMISSION

(30) Priorität: 27.06.2008 DE 102008002724
(43) Veröffentlichungstag der Anmeldung: 06.04.2011
(73) Patentinhaber: Robert Bosch GmbH, 70442 Stuttgart (DE)
(72) Erfinder: LAUK, Detlef, 77871 Renchen (DE); STERNS, Orlando, 76131 Karlsruhe (DE)
(86) Internationale Anmeldenummer: PCT/EP2009/056246
(87) Internationale Veröffentlichungsnummer: WO 2009/156236

(56) Entgegenhaltungen:
- DE-A1- 10 231 450
- DE-A1- 19 710 099
- DE-A1- 19 732 520

## Beschreibung

### Stand der Technik

Die Erfindung betrifft ein Verfahren zur Erkennung des Drehwinkels und einer Reversierposition einer Getriebe-Antriebseinheit, die einen durch eine Steuerung elektronisch geregelten reversierbaren Gleichstrommotor umfasst, welcher ein Antriebselement antreibt, das mit einem Abtriebselement zusammenwirkt. Die Erfindung betrifft außerdem eine Scheibenwischervorrichtung, insbesondere für Heckwischer, zur Durchführung dieses Verfahrens im Betrieb der Scheibenwischervorrichtung.

Es sind seit langem Scheibenwischer-Antriebsvorrichtungen bekannt, bei denen eine Drehbewegung eines in eine vorgegebene Richtung rotierenden Motors durch einen Exzenter-Mechanismus, insbesondere ein Kurbelgetriebe, in eine Hin- und Herbewegung des Scheibenwischers umgesetzt wird. Bei derartigen nicht reversierenden Antrieben erfolgt .oftmals eine Parkstellungserkennung über einen Sensor, der als Schleifer oder als berührungsloser Sensor ausgebildet sein kann. In diesem Zusammenhang hat die Parkstellungserkennung die Aufgabe, dass der Antrieb auch nach dem Abschalten der Scheibenwischerfunktion durch den Benutzer solange weiterläuft, bis die Wischer ihre Parkposition erreicht haben.

In jüngerer Zeit sind zunehmend auch elektromotorisch reversierende Antriebseinheiten, insbesondere für Scheibenwischer, aufgekommen, bei denen der Antriebsmotor direkt in unterschiedliche Richtungen entsprechend der Hin- und Herbewegung des Wischers gesteuert wird. Bei derartigen Antriebsvorrichtungen ist es erforderlich, Positionen des Scheibenwischers beziehungsweise des Antriebs, zumindest in den Umkehrpunkten (Reversierpositionen) seiner Bewegung, zu erfassen, um zum richtigen Zeitpunkt die Drehrichtung des Motors umschalten zu können. Herkömmliche Antriebsvorrichtungen verwenden zu diesem Zweck getrennte Detektoren beziehungsweise Positionssensoren, beispielsweise Hallsensoren, für die verschiedenen Positionen. Diese Art der Positionserfassung zur Steuerung der Antriebsvorrichtungen ist aufwändig und dementsprechend kostspielig. Deshalb werden reversierende Getriebe-Antriebseinheiten der genannten Art bislang hauptsächlich bei Kraftfahrzeugen im oberen Preissegment eingesetzt, obwohl sie hinsichtlich Baugröße, Gewicht, Spiele am Abtrieb sowie Zusatzfunktionen Vorteile haben, die ihre allgemeine Anwendung wünschenswert machen.

Aus der DE 198 40 895 Al ist eine Scheibenwischer-Antriebsvorrichtung bekannt, bei der es unter Einsparung von Positionssensoren genügt, lediglich einen gegebenen Punkt des Bewegungsbereichs des Scheibenwischers direkt mit einem Detektor zu erfassen. Von diesem Punkt aus kann die Bewegung des Scheibenwischers mithilfe eines inkrementellen Gebers relativ gemessen werden, was grundsätzlich die Erfassung einer beliebigen Zahl von Positionen des Wischers mithilfe eines einzigen Sensors ermöglicht.

Aus der DE 102 31 450 A1 ist eine hochauflösende Drehwinkelsensorik für Gleichstrommotoren, insbesondere für Wischanlagen, bekannt, bei der ein Winkelsignal des Abtriebselementes ermittelt und mit einem aus den Übergängen zwischen den Kommutierungsbereichen des Kommutators des Motors gemäß dem Ripple-Count-Verfahren gewonnenen Signal, welches die Winkellage der Antriebswelle angibt, zur Erweiterung des Auflösungsbereiches kombiniert wird.

Aus der DE 197 32 520 A1 ist eine Wischvorrichtung mit einem im Betriebsmodus mittels einer Positionssensorik gesteuerten reversierbaren Wischermotor bekannt, bei dem die Erkennung einer definierten, aktuellen Reversierposition durch Auslösen eines Lernmodus bzw. Testlaufs des Antriebs erfolgt. Dazu wird ein Wischarm gegen einen an der Fahrzeugscheibe angeordneten Anschlag gefahren, wobei die Steuerung eine elektronische Blockiererkennung aufweist, mittels derer die Steuerung die Reversierposition erkennt, sobald der Wischarm den Anschlag erreicht und der Motor blockiert. Im Anschluss erfolgt eine Erkennung des Drehwinkels relativ zur erkannten Reversierposition.

### Offenbarung der Erfindung

Das erfindungsgemäße Verfahren zur Erkennung des Drehwinkels und einer Reversierpositionen ist in Anspruch 1 gekennzeichnet. Eine erfindungsgemäße Scheibenwischervorrichtung zur Durchführung eines derartigen Verfahrens ist in Anspruch 8 gekennzeichnet. Weiterbildungen und bevorzugte Maßnahmen ergeben sich aus den Unteransprüchen.

Bei dem erfindungsgemäßen Verfahren ist zur Erkennung einer Reversierposition das Auslösen eines Referenzlaufs des Antriebs vorgesehen, bei dem ein am Antriebs- oder Abtriebselement des Motors angeordneter Vorsprung gegen einen Anschlag gefahren wird, wobei die Steuerung eine elektronische Blockiererkennung aufweist, mittels derer die Steuerung die Reversierposition erkennt, sobald der Vorsprung den Anschlag erreicht und der Motor blockiert. Weiterhin erfindungsgemäß ist die Erkennung des Drehwinkels relativ zur erkannten Reversierposition vorgesehen, wobei die Steuerung den nach Verlassen der erkannten Reversierposition zurückgelegten Drehwinkel durch Auswertung des Motorstroms und/oder einer davon abgeleiteten Größe bestimmt.

Die Erkennung der Umkehrlagen und des Drehwinkels werden demnach erfindungsgemäß nicht über eine zusätzliche Sensorik ermittelt. Vielmehr erfolgt die Erkennung lediglich einer Reversierposition, üblicherweise der Parkstellung des Antriebs beziehungsweise Wischers, über einen Anschlag und eine darauf reagierende Blockiererkennung in der Steuerung, während die Erkennung des zurückgelegten Drehwinkels über die Auswertung des Motorstroms erfolgen kann. Es ist keine zusätzliche Elektronik neben der Steuerung des Reversiermotors erforderlich. Die Erfindung ermöglicht eine Kostenreduzierung und eine Reduzierung der Anzahl der Komponenten der Getriebe-Antriebseinheit. Durch die Vereinfachung der Komponenten kann auf Standard-Komponenten aus anderen Anwendungsgebieten von Getriebe-Antriebseinheiten, beispielsweise bei der Sitzverstellung oder bei Fensterhebern für Kraftfahrzeuge zurückgegriffen werden. Dies war bisher aufgrund der mit ihrer technischen Umgebung vernetzten Struktur der Getriebe-Antriebseinheit nicht möglich, da immer eine Verbindung zwischen Bürstenhalter, Kundenstecker und Parkstellungselektronik hergestellt werden musste.

Gemäß einer als besonders vorteilhaft angesehenen Ausführungsform der Erfindung erfolgt die elektronische Blockiererkennung in der Steuerung ebenfalls durch Auswertung des Motorstroms und/oder einer davon abgeleiteten Größe. Wenn der Motor als Kommutatormotor ausgebildet ist, erfolgt die Auswertung des Motorstroms bei allen Ausführungsformen vorteilhaft dadurch, dass die Stromripple des Motorstroms ausgewertet werden, um die Ankerumdrehungen des Motors zu ermitteln, also durch eine an sich bekannte Ripple-Count-Messung.

Zur Schonung des mechanischen Systems ist es von Vorteil, wenn die Motordrehzahl beim Referenzlauf, mindestens kurz bevor der Vorsprung den Anschlag erreicht, gegenüber der Betriebsdrehzahl reduziert wird, so dass der Vorsprung langsam gegen den Anschlag gefahren wird.

Die erfindungsgemäße Scheibenwischervorrichtung für Kraftfahrzeuge umfasst eine Getriebe-Antriebseinheit, eine Steuerung und Mittel zur Durchführung des Verfahrens der oben beschriebenen Art, wobei die Mittel einen abtriebsseitig angeordneten Vorsprung und einen zugeordneten Anschlag an einem Getriebegehäuse umfassen. Die erfindungsgemäße Vorrichtung eignet sich insbesondere für Heckwischer.

### Kurze Beschreibung der Zeichnungen

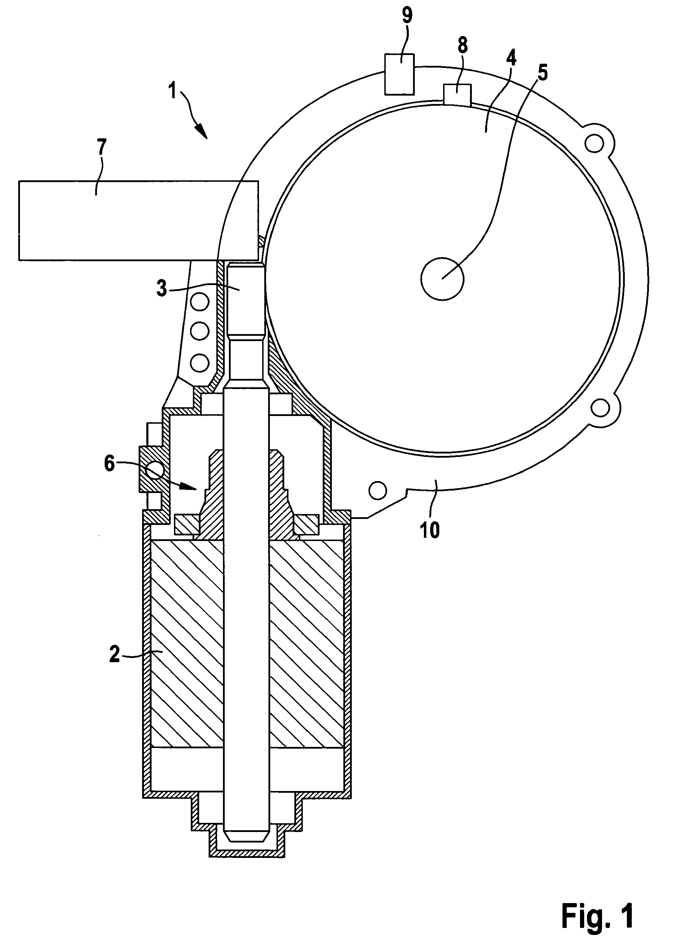

Die einzige Figur der Zeichnung zeigt eine Getriebe-Antriebseinheit mit Mitteln zur erfindungsgemäßen Erkennung des Drehwinkels und einer Reversierposition.

### Ausführungsform der Erfindung

Die in der Figur dargestellte Ausführungsvariante der Getriebe-Antriebseinheit 1 weist einen Gleichstrommotor 2, ein Antriebselement 3 und ein Abtriebselement 4 auf. Durch den Motor 2 wird das Antriebselement 3 angetrieben, welches wiederum das Abtriebselement 4 antreibt. Das Abtriebselement 4 ist hier als Abtriebsrad, insbesondere als Schneckenrad, mit integrierter Abtriebswelle 5 ausgebildet, während das Antriebselement 3 als eine auf der Ankerwelle des Motors 2 angeordnete Antriebsschnecke ausgebildet ist. Der Gleichstrommotor 2 weist unter anderem einen Kommutator 6 mit getrennten Kommutierungsbereichen sowie den Kommutierungsbereichen zugeordneten Kohlebürsten auf.

Schematisch angedeutet in der Figur ist ferner eine (ohne weiteres auch an einer anderen Stelle anordenbare) elektronische Steuerung 7, die eine Signalauswertung umfasst und die die Bewegung zwischen einer oberen und unteren Umkehrlage des Motors, also zwischen den vorgebbaren Reversierpositionen, steuert. Die Steuerung 7 verfügt über (nicht dargestellte) Eingänge für die hinsichtlich der Ankerumdrehungserkennung beziehungsweise hinsichtlich der Blockiererkennung auszuwertenden Signale, sowie über Ausgänge, die der Ansteuerung des Gleichstrommotors 2 dienen. Als Subsystem der Steuerung 7 kann eine Pulsweitenmodulation-Erzeugung vorgesehen sein, die eine feinfühlige Regulierung mittels unterschiedlich langen Rechteckimpulsen der Versorgungsspannung ermöglicht. Mithilfe der Steuerung 7 kann der Motor 2 beide Drehrichtungen erzeugen, so dass ein Reversieren der Abtriebswelle 5 und damit ein Pendeln des Heckwischers auf der Fahrzeugscheibe zwischen den gewünschten Umkehrlagen ermöglicht ist.

Es ist möglich, die Motordrehzahl in an sich bekannter Weise ohne Sensoren zu erfassen, indem die Stromripple des Motorstroms ausgewertet werden ("Ripple-Count-Verfahren"). Das bekannte Verfahren ist in der eingangs genannten DE 102 31 450 A1 näher beschrieben. Bei der Drehung von Gleichstrommotoren 2 ist aufgrund der Spannungsinduktion dem Gleichstrom, der dem Motor 2 zugeführt wird, ein hochfrequentes Signal (Stromripple) überlagert, dessen Frequenz von der Motordrehzahl abhängt. Die Stromripple bilden sich infolge der periodischen Änderung des wirksamen elektrischen Widerstands und der Induktivität durch den Übergang der Kohlebürsten des Gleichstrommotors beim Gleiten über die Kommutatorlamellen. Der Stromripple zeigt somit den Übergang der Kohlebürste von einer Kommutatorlamelle zur nächsten an und liefert so eine Information über den Winkel des Ankers. Durch Vorschaltung von Filtern des gemessenen Stromes können Störungen unterdrückt werden. Aus dem (gefilterten) Signal werden die Impulse extrahiert und gezählt ("Ripple Mount"). Die Impulse liefern inkrementelle Winkelinformationen.

Typischerweise beim Einschalten der Getriebe-Antriebseinheit 1 erfolgt zunächst ein Referenzlauf, um die Parkposition (untere Reversierpositionen) anzufahren und korrekt zu bestimmen, so dass für den folgenden Wischbetrieb, der gemäß dem dann ab Parkposition jeweils zurückgelegten Drehwinkel gesteuert wird, ein Referenzpunkt festgelegt ist. Beim Referenzlauf wird der Motor 2 mit dem Vorsprung 8 vorzugsweise mithilfe der Pulsweitenmodulation langsam gegen den Anschlag 9 im Getriebegehäuse 10 gefahren. Die Pulsweitenmodulation erlaubt günstiger Weise auch eine einfache Drehrichtungserkennung. Durch den Anschlag erkennt die Steuerung 7 mithilfe der elektronischen Blockiererkennung die Parkposition des Motors 2. Wenn der Motor 2 blockiert, erkennt dies die Steuerung 7 anhand des Ripple-Counts (Motor 2 ist bestromt, Anker dreht aber nicht). Sobald dies eintritt, gilt die Parkposition als erreicht und die Drehrichtung des Motors 2 wird umgeschaltet.

Im Wischbetrieb steuert die Elektronik 7 den Motor 2 aus der Parkstellung in Richtung obere Umkehrlage. Dabei werden die Ankerumdrehungen über die Steuerung 7 überwacht. Mit der Erkennung der Ankerumdrehungen kann über das bekannte Untersetzungsverhältnis des Schneckengetriebes der Drehwinkel an der Abtriebswelle 5 erkannt werden. Kurz vor der oberen Wendelage wird die Pulsweitenmodulation reduziert und der Motor 2 in der oberen Wendelage wieder umgepolt.

Da Heckwischer deutlich weniger häufig als Frontwischer betrieben werden, besteht eine verstärkte Gefahr der Verformung des Wischblattes, was wiederum zu deutlichen Rattererscheinungen führen kann. Durch eine alternierende Parkstellung kann dies verhindert werden. Dabei fährt der Motor 2 im Wechselfall über die Parkstellung hinaus, reversiert und fährt dann in die Parkstellung zurück, wobei das Wischblatt - wie gewünscht - in eine andere Richtung als im Normalfall verbogen wird.

## Patentansprüche

1. Verfahren zur Erkennung des Drehwinkels und einer Reversierposition einer Getriebe-Antriebseinheit (1), die einen durch eine Steuerung (7) elektronisch geregelten reversierbaren Gleichstrommotor (2) umfasst, welcher ein Antriebselement (3) antreibt, das mit einem Abtriebselement (4) zusammenwirkt, mit nachfolgenden Verfahrenschritten:
- Erkennung einer Reversierposition durch Auslösen eines Referenzlaufs des Antriebs, **dadurch gekennzeichnet, daß** bei dem Antrieb ein am Antriebs- oder Abtriebselement (3, 4) des Motors (2) angeordneter Vorsprung (8) gegen einen Anschlag (9) gefahren wird, wobei die Steuerung (7) eine elektronische Blockiererkennung aufweist, mittels derer die Steuerung (7) die Reversierposition erkennt, sobald der Vorsprung (8) den Anschlag (9) erreicht und der Motor (2) blockiert,
- Erkennung des Drehwinkels relativ zur erkannten Reversierposition, wobei die Steuerung (7) den nach Verlassen der erkannten Reversierposition zurückgelegten Drehwinkel durch Auswertung des Motorstroms und/oder einer davon abgeleiteten Größe bestimmt.

2. Verfahren nach Anspruch 1, **dadurch gekennzeichnet, dass** die elektronische Blockiererkennung in der Steuerung (7) durch Auswertung des Motorstroms und/oder einer davon abgeleiteten Größe erfolgt.

3. Verfahren nach Anspruch 1 oder 2, **dadurch gekennzeichnet, dass** der Motor (2) als Kommutatormotor ausgebildet ist, und dass die Stromripple des Motorstroms ausgewertet werden, um die Ankerumdrehungen des Motors (2) zu ermitteln (Ripple-Count-Messung).

4. Verfahren nach einem der Ansprüche 1 bis 3, **dadurch gekennzeichnet, dass** die Motordrehzahl beim Referenzlauf, mindestens kurz bevor der Vorsprung (8) den Anschlag (9) erreicht, gegenüber der Betriebsdrehzahl reduziert wird.

5. Verfahren nach einem der Ansprüche 1 bis 4, **dadurch gekennzeichnet, dass** die Steuerung (7) des Motors (2) mittels einer Pulsweitenmodulation oder einer Spannungsregelung erfolgt.

6. Verfahren nach einem der Ansprüche 1 bis 5, **dadurch gekennzeichnet, dass** der Anschlag (9) an einem Getriebegehäuse (10) der Getriebe-Antriebseinheit (1) angeordnet ist.

7. Verfahren nach einem der Ansprüche 1 bis 6, **dadurch gekennzeichnet, dass** die beim Referenzlauf anzufahrende Reversierposition eine Parkposition des Motors (2) bildet.

8. Scheibenwischervorrichtung für Kraftfahrzeuge, insbesondere für Heckwischer, mit einer Getriebe-Antriebseinheit (1), einer Steuerung (7) und mit Mitteln zur Durchführung des Verfahrens nach einem der Ansprüche 1 bis 7 im Betrieb der Scheibenwischervorrichtung, wobei die Mittel einen abtriebsseitig angeordneten Vorsprung (8) und einen zugeordneten Anschlag (9) an einem Getriebegehäuse (10) umfassen.

9. Scheibenwischervorrichtung nach Anspruch 8, **dadurch gekennzeichnet, dass** der Heckwischer in einer alternierenden Parkstellung ablegbar ist.

## Claims

1. Method for detecting the rotational angle and a reversing position of a geared drive unit (1) which comprises a reversible DC motor (2) which is electronically regulated by a controller (7) and which drives a drive element (3) which interacts with an output element (4), having the following method steps:
- detection of a reversing position by triggering a reference run of the drive, **characterized in that** at the drive a projection (8) which is arranged on the drive element or output element (3, 4) of the motor (2) is moved against a stop (9), wherein the controller (7) has an electronic blocking detector by means of which the controller (7) detects the reversing position as soon as the projection (8) reaches the stop (9) and the motor (2) blocks,
- detection of the rotational angle relative to the detected reversing position, wherein the controller (7) determines the rotational angle passed through after the detected reversing position is exited, by evaluating the motor current and/or a variable derived therefrom.

2. Method according to Claim 1, **characterized in that** the electronic blocking detection is carried out in the controller (7) by evaluating the motor current and/or a variable derived therefrom.

3. Method according to Claim 1 or 2, **characterized in that** the motor (2) is embodied as a commutator motor, and **in that** the current ripple of the motor current is evaluated in order to determine the revolutions of the armature of the motor (2) (ripple count measurement).

4. Method according to one of Claims 1 to 3, **characterized in that**, during the reference run, the motor speed is reduced with respect to the operating speed, at least just before the projection (8) reaches the stop (9).

5. Method according to one of Claims 1 to 4, **characterized in that** the control process (7) of the motor (2) is carried out by means of a pulse width modulation or voltage regulation.

6. Method according to one of Claims 1 to 5, **characterized in that** the stop (9) is arranged on a transmission housing (10) of the transmission drive unit (1).

7. Method according to one of Claims 1 to 6, **characterized in that** the reversing position which is to be approached during the reference run forms a parked position of the motor (2).

8. Windscreen wiper device for motor vehicles, in particular for rear windscreen wipers, having a geared drive unit (1), a controller (7) and having means for carrying out the method according to one of Claims 1 to 7 during operation of the windscreen wiper device, wherein the means comprise a projection (8) arranged on the output side and an assigned stop (9) on a transmission housing (10).

9. Windscreen wiper device according to Claim 8, **characterized in that** the rear windscreen wiper can be stored in an alternating parked position.

## Revendications

1. Procédé de détection de l'angle de rotation et d'une position de marche arrière d'une unité d'entraînement - transmission (1) comprenant un moteur à courant continu (2) inversable pouvant être réglé électroniquement par un élément de commande (7), ledit moteur entraînant un élément d'entraînement en entrée (3) interagissant avec un élément d'entraînement en sortie (4), avec les étapes de procédé suivantes :
- détection d'une position de marche arrière par déclenchement d'une course de référence de l'entraînement en entrée, **caractérisé en ce que** pour l'entraînement en entrée, une saillie (8) disposée au niveau d'un élément d'entraînement en entrée ou d'entraînement en sortie (3, 4) du moteur (2) est déplacée contre une butée (9), l'élément de commande (7) comportant une détection de blocage électronique à l'aide de laquelle l'élément de commande (7) détecte la position de marche arrière dès que la saillie (8) atteint la butée (9) et bloque le moteur (2) ;
- détection de l'angle de rotation par rapport à la position de marche arrière détectée, l'élément de commande (7) définissant l'angle de rotation accompli une fois la position de marche arrière quittée par analyse du courant moteur et/ou d'une grandeur en découlant.

2. Procédé selon la revendication 1, **caractérisé en ce que** la détection de blocage électronique se produit dans l'élément de commande (7) par analyse du courant moteur et/ou d'une grandeur en découlant.

3. Procédé selon la revendication 1 ou 2, **caractérisé en ce que** le moteur (2) prend la forme d'un moteur de commutateur et que les rides de courant du courant moteur sont analysées pour calculer le nombre de tours de l'ancre du moteur (2) (mesure de comptage des rides).

4. Procédé selon l'une quelconque des revendications 1 à 3, **caractérisé en ce que** lors de la course de référence, la vitesse de rotation du moteur est réduite au moins juste avant que la saillie (8) n'atteigne la butée (9) par rapport à la vitesse de rotation en fonctionnement.

5. Procédé selon l'une quelconque des revendications 1 à 4, **caractérisé en ce que** l'élément de commande (7) commande le moteur (2) à l'aide d'une modulation par largeur d'impulsion ou d'un réglage de la tension.

6. Procédé selon l'une quelconque des revendications 1 à 5, **caractérisé en ce que** la butée (9) est disposée contre un carter de transmission (10) de l'unité d'entraînement - transmission (1).

7. Procédé selon l'une quelconque des revendications 1 à 6, **caractérisé en ce que** la position de marche arrière à atteindre lors de la course de référence forme une position de stationnement du moteur (2).

8. Dispositif d'essuie-glace pour véhicules automobiles, notamment pour essuie-glace arrière, avec une unité d'entraînement - transmission (1), un élément de commande (7) et des moyens de mise en oeuvre du procédé selon l'une quelconque des revendications 1 à 7 lorsque le dispositif d'essuie-glace fonctionne, les moyens comprenant une saillie (8) disposée du côté d'entraînement en sortie et une butée (9) associée placée au niveau d'un carter de transmission (10).

9. Dispositif d'essuie-glace selon la revendication 8, **caractérisé en ce que** l'essuie-glace arrière peut être placé dans une position de stationnement fonctionnant en alternance.
